# EUROPÄISCHE PATENTSCHRIFT

(11) **EP 2 031 626 B1**
(45) Veröffentlichungstag und Bekanntmachung des Hinweises auf die Patenterteilung: **18.12.2013**
(21) Anmeldenummer: 07017246.5
(22) Anmeldetag: 03.09.2007
(51) Int. Cl.: H01H 71/02, H02B 1/04

(54) **Elektrische Niederspannungs-Schaltanlage**
Electrical low-voltage switching station
Dispositif de commutation à basse tension électrique

(43) Veröffentlichungstag der Anmeldung: 04.03.2009
(73) Patentinhaber: Siemens Aktiengesellschaft, 80333 München (DE)
(72) Erfinder: Fröhlich, Paul, 92237 Sulzbach-Rosenberg (DE); Keil, Rainer, 90451 Nürnberg (DE)

(56) Entgegenhaltungen:
- EP-A- 1 744 487
- WO-A2-03/102857
- DE-A1- 10 315 646
- DE-U1-202006 000 702
- DE-U1-202007 006 824
- GB-A- 2 242 338

## Beschreibung

Die Erfindung betrifft eine Elektrische Niederspannungs-Schaltanlage. Darüber hinaus betrifft die Erfindung ein Verfahren zur Kommunikation in einer elektrischen Niederspannungs-Schaltanlage.

Aus der DE 20 2007 006 824 U1 ist ein Schaltschrank zur Installation elektrischer Geräte wie Steuereinrichtungen, Schalteinrichtungen oder Reihenklemmen bekannt. In einem vorzugsweise abschließbaren Schaltschrankkorpus des Schaltschranks ist wenigstens ein Montageboden angeordnet, welcher mit Schienen zum Aufsetzen der elektrischen Geräte versehen ist, wobei die Schienen mit Leitern versehen sind, die die elektrischen Geräte beim Aufsetzen auf die Schienen kontaktieren. Die elektrischen Geräte können mit RFID-Tags versehen sein, um den Gerätetyp durch einen Empfänger und eine daran angeschlossene Steuereinrichtung am Schaltschrank automatisch zu erkennen.

Aus dem Bereich der Energieverteilung und in Motorschaltschränken, also Niederspannungs-Schaltanlagen für Motorabzweige, deren Hauptaufgabe es ist, Motoren in industriellen Prozesse zu steuern und zu schützen, ist der Einsatz der sogenannten Einschub-Technik bekannt. Dabei werden die Motorabzweige in Einschubmodulen aufbewahrt. Diese Einschubmodule lassen sich dann nach Art von Schubkästen in entsprechend vorgesehene Einschubschächte positionieren. Solche Motorschaltschränke werden auch als bei Motor Control Center (MCC) bezeichnet.

Zur Realisierung des Hauptstromkreises und des Steuerstromkreises sind Steckschienen bzw. Steckverbinder oder geeignete Verbindungselemente anderer Art vorgesehen, die im montierten Zustand zusammenwirken. Diese dienen zur Übertragung von Hauptstrom (z. B. 400 V) und zur Übertragung von Hilfsenergie

(Steuerenergie) zur Versorgung der in dem Einschubmodul enthaltenen Geräte und Vorrichtungen. Darüber hinaus dienen diese Steckverbinder aber auch zur Kommunikation zwischen dem Einschubmodul und der Schaltanlage und somit zur Anbindung an eine übergeordnete Steuerungsebene. Dies ist insbesondere bei solchen Einschüben der Fall, die intelligente Geräte enthalten, welche mit Hilfe dieser Kommunikationsschnittstellen über Bussysteme, insbesondere Feldbussysteme, wie PROFIBUS oder PROFINET, mit einer Steuerzentrale der Schaltanlage kommunizieren. Über eine solche Anbindung werden beispielsweise Ansteuersignale, Rückmeldungen, Fehlersignale bzw. allgemein Prozessdaten, Parameter und Diagnosedaten von den in den Einschüben angeordneten Geräten (z.B. Motorabzweigen) zu der übergeordnete Steuerungsebene (z.B. eine Steuerzentrale) übertragen.

Aus dem Stand der Technik ist es bekannt, derartige Feldbus-Verbindungen über besonders hochwertige elektrische Steckverbinder zu verwirklichen. Alternativ hierzu erfolgt die Busanbindung entsprechend der verwendeten Topologie mit aufwändigen, schaltanlagenspezifischen Übergängen von Linie auf Stich, wobei bei der Kontaktierung der Einschubmodule Standard-Steckverbindungen verwendet werden.

Steckverbinder, die eine sichere Übertragung ermöglichen, sind aber nicht nur teuer. Es kann wegen der aufgrund des geringen Stromflusses nur geringen Selbstreinigung der Steckverbinder auch zu Fehlern in der Kontaktierung kommen. Ist entsprechend der verwendeten Bustopologie der Anschluss eines Einschubes als Stichleitung verwirklicht, so ist die maximale Datenübertragungsrate reduziert. Außerdem erfolgt in diesem Fall bei einer Trennung der Steckverbindung, beispielsweise bei einem Entfernen des Einschubmoduls aus dem Einschubschacht, eine Unterbrechung des Bussystems. Darüber hinaus ist die Verwendung von Steckverbindern auch unter dem Gesichtspunkt der Störanfälligkeit nachteilig.

Eine Aufgabe der vorliegenden Erfindung ist es, eine besonders einfache und sichere Alternative zu den zuvor beschriebenen Steckverbindern bereitzustellen.

Diese Aufgabe wird durch eine Elektrische Niederspannungs-Schaltanlage nach Anspruch 1 bzw. durch ein Verfahren nach Anspruch 4 gelöst.

Die erfindungsgemäße elektrische Niederspannungs-Schaltanlage umfasst wenigstens ein in einem Einschubschacht positionierbares Einschubmodul, wobei dem Einschubmodul eine Kommunikationseinrichtung zur Anbindung an eine übergeordnete Steuerungsebene zugeordnet ist, und wobei die dem Einschubmodul zugeordnete Kommunikationseinrichtung für eine drahtlose Kommunikation, nämlich eine Funkübertragung, mit einer einen Leckwellenleiter umfassenden Kommunikationseinrichtung der Schaltanlage ausgebildet ist.

Beim erfindungsgemäßen Verfahren zur Kommunikation in einer elektrischen Niederspannungs-Schaltanlage mit wenigstens einem in einem Einschubschacht positionierbaren Einschubmodul ist dem Einschubmodul eine Kommunikationseinrichtung zur Anbindung an eine übergeordnete Steuerungsebene zugeordnet. Die Kommunikation zwischen der dem Einschubmodul zugeordneten Kommunikationseinrichtung und einer Kommunikationseinrichtung der Schaltanlage erfolgt drahtlos, nämlich per Funkübertragung, wobei ein Leckwellenleiter eine Komponente der Kommunikationseinrichtung der Schaltanlage bildet.

Die im Zusammenhang mit der Schaltanlage erläuterten Vorteile und Ausgestaltungen gelten sinngemäß auch für das Verfahren und umgekehrt.

Eine Kernidee der Erfindung ist es, durch den Einsatz einer drahtlose Kommunikation die bei herkömmlichen Steckverbindern vorhandenen Probleme zu vermeiden. Hierzu werden in Niederspannungs-Schaltanlagen diejenigen Steckverbinder, die bisher zur Verwirklichung der Kommunikationsschnittstellen zwischen Einschubmodulen und Schaltanlage verwendet wurden, durch Einrichtungen zur drahtlosen Kommunikation ersetzt. Die Übertragung von Hauptstrom und Hilfsenergie erfolgt dagegen weiterhin über herkömmliche Kontakte.

Die Verwendung drahtloser Kommunikation stellt eine besonders einfache und sichere Alternative zu den bekannten Steckverbindern dar. Für die Buskommunikation sind keine aufwändigen Steckverbinder mehr erforderlich. Darüber hinaus sind Kontaktierungsfehler ausgeschlossen. Das "Ziehen" und "Stecken" von Einschubmodulen ist aufgrund der verwendbaren Topologie des Feldbusses rückwirkungsfrei möglich, also ohne Auswirkungen auf andere angeschlossene Einschubmodule.

Besonders vorteilhaft ist die Anwendung der Erfindung in Motorschaltschränken, da hier der schnelle Austausch von Motorabzweigen im Service- oder Fehlerfall für die Anwender sehr wichtig ist.

Unter dem Begriff "Niederspannungs-Schaltanlage" werden dabei Schaltanlagen verstanden, die für einen Betrieb mit Niederspannung, also einen Spannungsbereich bis 1000 Volt ausgelegt sind.

Unter dem Begriff "Einschubschacht" wird allgemein und unabhängig von dessen konkreter konstruktiver Ausgestaltung der Aufnahme- bzw. Montageort des Einschubmoduls in der Schaltanlage verstanden. Der Einschubschacht kann also auch ein Halterahmen oder dergleichen sein.

Vorteilhafte Ausgestaltungen der Erfindung sind in den Unteransprüchen angegeben.

Die drahtlose Übertragung kann beispielsweise auf WLAN-Basis erfolgen. Die Verwendung eines WLAN-Systems ist bei Motorschaltschränken besonders vorteilhaft, da bereits WLAN-Komponenten verfügbar sind, die für den Einsatz im industriellen Umfeld geeignet sind.

Die Verwendung des zur Funkübertragung vorgesehenen Leckwellenleiters als Teil der Kommunikationseinrichtung ist besonders vorteilhaft. Derartige offene Wellenleiter sind an sich bereits aus dem Stand der Technik bekannt und dienen zumeist der Funkversorgung entlang von Fahrspuren durch längshomogene Abstrahlung von HF-Energie. So ist es beispielsweise bekannt, Leckwellenleiter zur Steuerung von Transportwagen in Lagerhaltungssystemen einzusetzen. Im Gegensatz zu freistrahlenden Antennen ist bei Anwendung von Leckwellenleitern die Gefahr von Übertragungsproblemen durch Reflexionen, Interferenzen etc. praktisch ausgeschlossen. Daher und wegen des sehr zuverlässig kontrollierbaren und definierten Funkfeldes sowie der verschleißfreien und wartungsarmen berührungslosen Übertragungstechnologie ist eine hohe Sicherheit und Stabilität der Übertragungswege gegeben. Durch die Übertragungscharakteristik entlang der Längsachse des Leckwellenleiters wird zudem das Entstehen von Elektrosmog in der Anwendungsumgebung begrenzt.

Der Leckwellenleiter ist vorzugsweise im Inneren eines Schaltschrankes der Schaltanlage angeordnet, und zwar entsprechend der Position einer Anzahl von in dem Schaltschrank angeordneten Einschubschächten, so daß ihre Übertragungscharakteristik besonders effektiv zum Einsatz kommt. Das ist insbesondere dann der Fall, wenn der Leckwellenleiter entlang der Rückseiten der Einschubschächte verlegt ist. Im montierten Zustand beträgt der Abstand zwischen den Rückseiten der Einschubschächte und dem Leckwellenleiter vorzugsweise nur wenige Zentimeter, so daß die Kommunikation mit einer sehr geringen Übertragungsenergie erfolgen kann. Dadurch wird nicht nur erreicht, daß das gesamte Übertragungssystem verhältnismäßig klein dimensioniert werden kann, was Montageplatz und Herstellungskosten der einzelnen Übertragungskomponenten, insbesondere im Bereich der HF-Energie-Bereitstellung und -Einspeisung betrifft. Zugleich muß auch vergleichsweise wenig HF-Energie in die Anwendungsumgebung abgegeben werden, wodurch die Entstehung von unnötigem Elektrosmog verhindert wird. Die Entstehung von Elektrosmog wird zudem auch dadurch begrenzt, daß der Leckwellenleiter im Inneren des Schaltschrankes angeordnet ist, sofern dieser zugleich als Abschirmung dient.

Während auf Seiten der Schaltanlage, also den Einschüben zugeordnet, vorzugsweise ein Leckwellenleiter als Antenne zum Einsatz kommt, die mit einer zumeist entfernt angeordneten Sende-/Empfangeinheit, z. B. in Form einer Steuerzentrale, zusammenwirkt, ist auch dem Einschubmodul eine Kommunikationseinrichtung zugeordnet, die eine Antenne und eine Sende- und/oder Empfangseinheit aufweist. Je nach verwendeter Übertragungstechnologie können dabei die unterschiedlichsten Komponenten zum Einsatz kommen.

Besonders vorteilhaft ist eine Ausführungsform einer elektrische Niederspannungs-Schaltanlage, deren Kommunikationseinrichtungen zum Senden und/oder Empfangen von Daten ausgebildet sind, die für die Erkennung des Einschubschachtes und/oder des Einschubmoduls relevant sind, und die Mittel zum automatischen Erkennen eines Einschubschachtes und/oder eines Einschubmoduls aufweist. Dadurch ist es möglich, erkennungsrelevante Daten drahtlos zu übertragen, um damit eine exakte Zuordnung des Einschubmoduls (und damit des darin angeordneten Motorabzweiges oder dergleichen) zu einem bestimmten Einschubschacht, also einem bestimmten Einbauort der Schaltanlage, zu ermöglichen. Mit anderen Worten erfolgt eine automatische Erkennung des Einschubschachtes und/oder des Einschubmoduls, zu welchem Zweck Daten, die für diese Erkennung relevant sind, von den Kommunikationseinrichtungen drahtlos übertragen werden.

Der Einsatz einer mechanischen Kodiervorrichtung, wie beispielsweise eines aus dem Stand der Technik bekannten Kodiersteckers, ist damit überflüssig. Als kodierte "Kupplungsteile" dienen die Kommunikationseinrichtungen von Einschubmodul und/oder Einschubschacht.

Von Vorteil ist, daß die Anzahl der "Kodierungen" im Gegensatz zu herkömmlichen mechanischen Kodiersteckern nicht begrenzt ist. Durch die Verwendung von erkennungsrelevanten Daten, deren Vielfalt und Auswahl nicht beschränkt ist, können Erkennungs- und damit Zuordnungsvorgänge für beliebig viele Komponenten (Einschubmodule, Einschubschächte) erfolgen. Unzulänglichkeiten mechanischer Kodierstecker, beispielsweise aufgrund von mechanischen Defekten oder Verschmutzung, gehören der Vergangenheit an. Insgesamt wird damit eine besonders einfache und zudem auch sichere Alternative zu den aus dem Stand der Technik bekannten Kodiersteckern bereitgestellt.

Besonders vorteilhaft ist es in diesem Zusammenhang, wenn das Einschubmodul und/oder der Einschubschacht zum Betrieb mit der korrespondierenden Komponente erst dann freigegeben wird, wenn eine Überprüfung der erkennungsrelevante Daten erfolgreich abgeschlossen ist, anderenfalls das Einschubmodul und/oder der Einschubschacht für einen solchen Betrieb gesperrt bleibt oder gesperrt wird.

Das Senden und/oder Empfangen der erkennungsrelevanten Daten erfolgt vorzugsweise während der oder unmittelbar im Anschluss an die Montage des Einschubmoduls in den Einschubschacht sowie vorzugsweise automatisch. Anders ausgedrückt erfolgt das Senden und/oder Empfangen dieser Daten vorzugsweise in einem direkten zeitlichen Zusammenhang mit der Montage eines Einschubmoduls in einen Einschubschacht. Damit wird sichergestellt, daß das Erkennen und die Freigabe bzw. Nichtfreigabe des Betriebs eines bestimmten Einschubmoduls zeitnah erfolgt.

Während es im Sinne der Erfindung grundsätzlich offen ist, zwischen welchen Objekten die Kommunikation in Bezug auf erkennungsrelevante Daten stattfindet - so kann beispielsweise vorgesehen sein, daß das Einschubmodul direkt mit einem entfernt angeordneten Empfänger kommuniziert, beispielsweise einem an anderer Stelle der Schaltanlage angeordneten Steuerzentrale - so ist es nach einer besonders vorteilhaften Ausführungsform der Erfindung vorgesehen, dass die dem Einschubschacht zugeordnete Kommunikationseinrichtung und/oder die dem Einschubmodul zugeordnete Kommunikationseinrichtung erkennungsrelevante Daten von derjenigen Kommunikationseinrichtung erhält, die der jeweils korrespondierenden Komponente zugeordnet ist. Die korrespondierende Komponente ist dabei diejenige, mit welcher gerade ein Zusammenführen im Sinne einer Montage erfolgt. Es ist dabei sowohl möglich, dass die dem Einschubschacht zugeordnete Kommunikationseinrichtung erkennungsrelevante Daten von der dem Einschubmodul zugeordneten Kommunikationseinrichtung erhält, als auch, dass die dem Einschubmodul zugeordnete Kommunikationseinrichtung erkennungsrelevante Daten von der dem Einschubschacht zugeordneten Kommunikationseinrichtung erhält. Auch eine Datenübertragung in beide Richtungen ist möglich und - je nach Anwendungsfall - auch erwünscht.

Erfindungsgemäß kann somit unter anderem eine "passive", wie auch eine "aktive Kodierung" erfolgen. Dabei wird unter einer "passiven Kodierung" eine Konfiguration verstanden, bei der die dem üblicherweise ortsfesten Einschubschacht zugeordnete Kommunikationseinrichtung lediglich als "passive" Komponente vorliegt, welche von einer "aktiven" Komponente, hier der dem beweglichen Einschubmodul zugeordneten Kommunikationseinrichtung, angesprochen, gegebenenfalls mit Energie versorgt und "ausgelesen" wird. Ein Beispiel für eine derartige "passive Kodierung" ist der Einsatz der an sich bekannten Radio Frequency Identification (RFID)-Technologie. Diese ist besonders für sicherheitsrelevante Anwendungen geeignet, da das Risiko einer Beeinflussung von außen, beispielsweise durch Magnetfelder, gering ist. Andere Beispiele für eine "passive Kodierung" sind die Verwendung eines Schwingkreises oder eines Magnetschalters, deren Aufbau und Funktion dem Fachmann ebenfalls geläufig sind.

Unter einer "aktiven Kodierung" wird eine Konfiguration verstanden, bei der sowohl die dem Einschubschacht zugeordnete Kommunikationseinrichtung, als auch die dem Einschubmodul zugeordnete Kommunikationseinrichtung unabhängig voneinander funktionstüchtig, insbesondere selbst mit Energie versorgt sind. Ein Beispiel für eine derartige "aktive Kodierung" ist der Einsatz einer an sich bekannten Funk- oder Infrarotübertragungstechnologie oder dergleichen mit zwei autonomen Sende- und/oder Empfangseinheiten.

Gemäß einer weiteren Ausführung der Erfindung überträgt die dem Einschubschacht zugeordnete Kommunikationseinrichtung und/oder die dem Einschubmodul zugeordnete Kommunikationseinrichtung die erkennungsrelevanten Daten an eine dem Einschubschacht und/oder dem Einschubmodul zugeordnete lokale Freigabeeinheit und/oder an eine dem Einschubschacht und/oder dem Einschubmodul zugeordnete entfernte Freigabeeinheit. Mit anderen Worten ist es sowohl möglich, dass die dem Einschubmodul zugeordnete Kommunikationseinrichtung die erkennungsrelevanten Daten an eine dem Einschubmodul zugeordnete lokale und/oder eine entfernte Freigabeeinheit überträgt, als auch, dass die dem Einschubschacht zugeordnete Kommunikationseinrichtung die erkennungsrelevanten Daten an eine dem Einschubschacht zugeordnete lokale und/oder eine entfernte Freigabeeinheit überträgt.

Bei der Freigabeeinheit, also dem Mittel zum automatischen Erkennen von Einschubschacht bzw. Einschubmodul, handelt es sich vorzugsweise um eine Datenverarbeitungsvorrichtung, die zur Ausführung eines Computerprogramms zur Erkennung und Freigabe von Komponenten ausgebildet ist. Hierzu ist die Datenverarbeitungsvorrichtung mit wenigstens einem Mikroprozessor, einem Datenspeicher, einer Dateneingangsvorrichtung, einer Datenausgangsvorrichtung und entsprechenden Datenübertragungsvorrichtungen zwischen diesen Bestandteilen versehen.

Vorzugsweise wird das Einschubmodul und/oder der Einschubschacht zum Betrieb mit der korrespondierenden Komponente dann freigegeben, wenn eine Überprüfung der erkennungsrelevante Daten erfolgreich abgeschlossen ist, anderenfalls das Einschubmodul und/oder der Einschubschacht für einen solchen Betrieb gesperrt bleibt oder gesperrt wird. Die Entscheidung über die Freigabe erfolgt dabei unter Einbeziehung erkennungsrelevanter Daten in der Freigabeeinheit.

Besonders vorteilhaft ist es, wenn das Einschubmodul und/oder der Einschubschacht vor der Freigabe an einen Betrieb mit der korrespondierenden Komponente angepaßt wird. Mit anderen Worten kann unmittelbar nach der Erkennung der Komponenten und vor deren Freigabe eine Modifizierung des Einschubschachtes und/oder der Einschubkomponente erfolgen. Dies ist insbesondere dann von Vorteil, wenn die entsprechende Komponente ohne eine solche Modifizierung nicht für einen ordnungsgemäßen Betrieb befähigt wäre und erst die Modifizierung einen solchen Betrieb ermöglicht. Die Erkennung der Komponenten dient in diesem Fall in erster Linie dazu, zu ermitteln, in welchem Umfang einer Modifizierung vorgenommen werden muß. Die Modifizierung selbst, die vorzugsweise automatisch vonstatten geht, muß keine bauteilseitigen Änderungen umfassen. Oftmals ist es ausreichend, einzelne Komponenten von Einschubmodul und/oder Einschubschacht an die Anforderungen des konkreten Einzelfalls anzupassen, z. B. auf Seiten des Einschubschachtes eine Anpassung des Kommunikationsprotokolls durchzuführen.

So liegt es im Rahmen der Erfindung, in diesem Zusammenhang eine in dem Einschubmodul angeordnete Komponente, beispielsweise einen Motorabzweig, in Abhängigkeit von dem Ort des Einbaus, d.h. in Abhängigkeit von dem verwendeten Einschubschacht, mit geeigneten Betriebsparametern oder anderen Daten zu versorgen. Auch ist es möglich, in einer Grundkonstellation sämtliche zur Verfügung stehenden Einschubschächte "neutral" zu gestalten und erst im Anschluß an die Montage eines konkreten Einschubmoduls an die im Zusammenhang mit einem Betrieb dieses Einschubmoduls stehenden Erfordernisse anzupassen.

Die zuletzt genannten Ausführungsformen der Erfindung sind sowohl bei dem Einsatz von RFID, als auch bei der "aktiven Kodierung" besonders einfach und vorteilhaft realisierbar.

Nachdem eine Freigabe erfolgt ist, wird dann das Einschubmodul und/oder der Einschubschacht vorzugsweise mit solchen Daten versorgt, die an einen Betrieb mit der korrespondierenden Komponente angepaßt sind. Darüber hinaus kann die gesamte Art und Weise des Betriebs der Komponenten an die Eigenschaften der verwendeten Komponenten angepaßt werden.

Insgesamt ergibt sich eine sehr flexible, den Bedürfnissen der jeweiligen Anwendung einfach anpaßbare Lösung, die mit geringem technischen Aufwand realisiert werden kann. Zusätzliche Vorteile ergeben sich durch die hohe Informationsdichte des Kodiermaterials, z.B. bei Verwendung der RFID-Technologie und der "aktiven Kodierung". So können beispielsweise Gruppenkodierungen definiert und/oder Parameter mit übertragen werden, so beispielsweise die Adresse der entsprechenden Komponente bei kommunikationsfähigen Systemen, also Systemen bei denen die Kommunikation zwischen Einschubmodulen und Einschubschächten einerseits und einer Steuerungszentrale oder dergleichen andererseits über ein Bussystem, insbesondere ein Feldbussystem, erfolgt, beispielsweise PROFIBUS oder PROFINET.

In Kombination mit dem Grundgedanken der vorliegenden Erfindung, eine drahtlose Kommunikation zwischen Einschubmodulen und Schaltanlage zu verwenden, um dadurch herkömmliche Steckverbinder zu ersetzen, kann mit der zuletzt beschriebenen Möglichkeit einer drahtlosen automatischen Erkennung eines Einschubmoduls und/oder eines Einschubschachtes ein besonders einfacher Aufbau einer Niederspannungs-Schaltanlage verwirklicht werden, die zudem besonders sicher handhabbar ist. So kann es beispielsweise vorgesehen sein, dass eine für den Betriebs- oder Steuervorgang des Verbrauchers relevante Kommunikation zwischen einem Einschubmodul und der Schaltanlage nur dann freigegeben wird, wenn zuvor durch eine Erkennung des Einschubmoduls dessen Anordnung in dem dafür vorgesehenen Einschubmodul überprüft wurde.

Die Erfindung wird nachfolgend anhand von Ausführungsbeispielen beschrieben, die mit Hilfe von Zeichnungen näher erläutert werden. Hierbei zeigen in vereinfachten, z. T. schematischen Darstellungen:
- FIG 1: eine erste Schaltanlage nach dem Stand der Technik,
- FIG 2: eine zweite Schaltanlage nach dem Stand der Technik,
- FIG 3: eine erfindungsgemäße Schaltanlage.

Gleiche Bezugszeichen in den nachfolgend ausführlich beschriebenen Figuren entsprechen Elementen gleicher oder vergleichbarer Funktion.

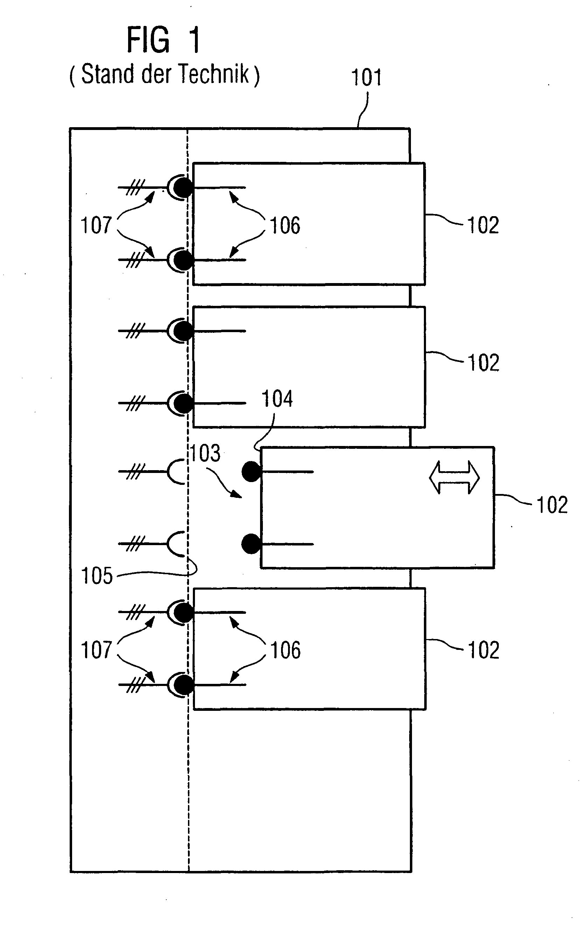

Aus dem Stand der Technik sind Motorschaltschränke 101 in Einschub-Technik bekannt, vgl. FIG 1. Dabei sind eine Anzahl Einschubmodule 102 vorgesehen, die in Einschubschächten 103 positionierbar sind. Jedes Einschubmodul 102 enthält dabei beispielsweise einen Motorabzweig. Zur Realisierung des Hauptstromkreises und des Steuerstromkreises sind sowohl an den Rückseiten 104 der Einschubmodule 102, als auch an den Rückseiten 105 der Einschubschächte 103, die durch die Rückwand des Motorschaltschrankes 101 gebildet wird, Steckschienen bzw. Steckverbinder 106, 107 oder geeignete Verbindungselemente anderer Art vorgesehen, die im montierten Zustand zusammenwirken. Diese Steckverbinder 106, 107 dienen im wesentlichen zur Übertragung von Hauptstrom (z. B. 400 V), zur Übertragung von Hilfsenergie (Steuerenergie) zur Versorgung der in dem Einschubmodul enthaltenen Geräte und Vorrichtungen. Darüber hinaus dienen diese Steckverbinder 106, 107 zum Zweck der Kommunikation zwischen dem Einschubmodul 102 einerseits und dem Einschubschacht 103 und damit dem Motorschaltschrank 101 andererseits, insbesondere zur Übertragung von Ansteuersignalen, Rückmeldungen, Fehlersignalen usw., z. B. über ein Feldbussystem.

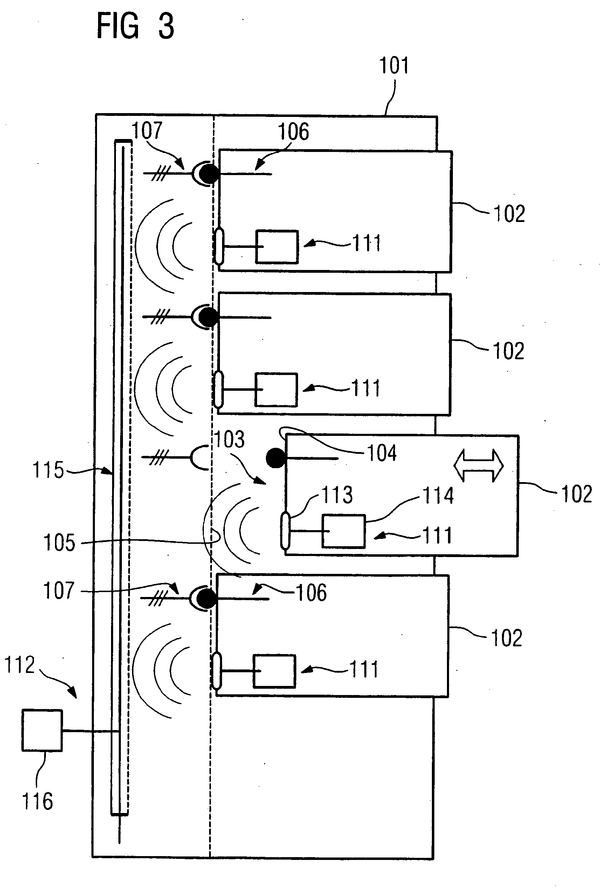

Die zur Übertragung von Hauptstrom und Hilfsenergie zwischen dem Einschubmodul 102 und dem Einschubschacht 103 dienenden, zusammenwirkende Steckschienen bzw. Steckverbinder 106, 107 sind - ebenso wie im Stand der Technik - sowohl an den Rückseiten 104 der Einschubmodule 102, als auch an den Rückseiten 105 der Einschubschächte 103 vorgesehen, vgl. FIG 3.

Anders als im Stand der Technik sieht es die Erfindung jedoch vor, durch den Einsatz einer drahtlose Kommunikation die bei herkömmlichen Steckverbindern 106, 107 vorhandenen Probleme zu vermeiden. Hierzu werden die zur Kommunikation dienenden Steckverbinder durch Einrichtungen zur drahtlosen Kommunikation auf Funkbasis ersetzt.

Bei den Einrichtungen zur drahtlosen Kommunikation handelt es sich zum einen um dem Einschubmodul 102 zugeordnete Kommunikationseinrichtungen 111 zur Anbindung an eine übergeordnete Steuerungsebene, nämlich die Steuerzentrale des Motorschaltschrankes 101. Die Kommunikationseinrichtungen 111 sind dadurch gekennzeichnet, daß sie für eine drahtlose Kommunikation mit einer entsprechend ausgebildeten Kommunikationseinrichtung 112 des Motorschaltschrankes 101 ausgebildet sind. Die Kommunikationseinrichtungen 111 umfassen jeweils eine Antenne 113 und eine Sende- und/oder Empfangseinheit 114. Dabei befinden sich die Antennen 113 an den Rückseiten 104 der Einschubmodule 102, während die Sende- und/oder Empfangseinheiten 114 an einer beliebigen Stelle innerhalb der Einschubmodule 102 platzierbar sind.

Zum anderen handelt es sich bei den Einrichtungen zur drahtlosen Kommunikation um eine Kommunikationseinrichtung 112 des Motorschaltschrankes 101. Diese Kommunikationseinrichtung 112 umfasst einen Leckwellenleiter 115, der mit einer als Sende-/Empfangeinheit dienenden Steuerzentrale 116 verbunden ist.

Die Kommunikation zwischen der dem Einschubmodul 102 zugeordneten Kommunikationseinrichtung 111 und der Kommunikationseinrichtung 112 des Motorschaltschrankes 101 erfolgt somit drahtlos.

Leckwellenleiter 115 sind Hochfrequenzleiter, die zumeist an einem Ende zum Zweck der Einspeisung mit einer Basisstation, hier der Steuerzentrale 116, verbunden sind, während ihr anderes Ende mit einem Widerstand reflexionsfrei abgeschlossen ist. Es kann sich dabei zum einen im klassischen Sinn um Hohlleiter mit Schlitzen handeln. Zum anderen können als Leckwellenleiter 115 auch besonders bearbeitete Koaxialkabel verwendet werden, die über ihre gesamte Länge "lecken". Vorzugsweise kommt im Rahmen der hier beschriebenen Ausführungsform der Erfindung ein sogenanntes "RCoax Cable" der Fa. SIEMENS AG zur Anwendung.

Als Funksysteme kommen digitale Funksysteme, wie z. B. WLAN und Bluetooth oder TDMA-Systeme in Frage. Die Einspeisung und der Betrieb des Leckwellenleiters 115 ebenso wie die Anbindung an die Steuerzentrale 116 und die Verwendung geeigneter Übertragungsprotokolle, wie PROFIBUS oder dergleichen, sind dem Fachmann bekannt, so daß hier nicht weiter darauf eingegangen werden muß.

Der Leckwellenleiter 115 ist im Inneren des Motorschaltschrankes 101, und zwar entlang der Rückseiten 105 der Einschubschächte 103 angeordnet. Im montierten Zustand beträgt der Abstand zwischen den Rückseiten 105 der Einschubschächte 103 und dem Leckwellenleiter 115 nur wenige Zentimeter.

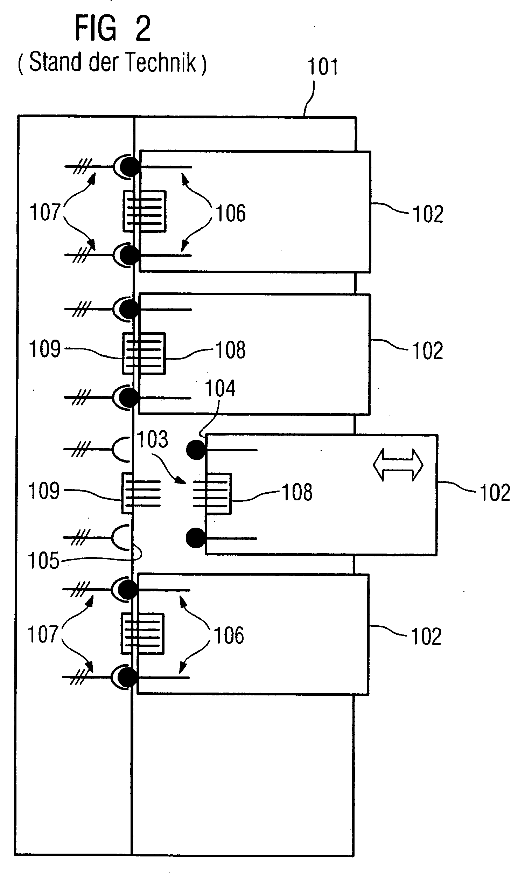

Nachfolgend wird eine zweite Ausführungsform der Erfindung beschrieben. Wie in FIG 2 abgebildet, weisen die aus dem Stand der Technik bekannten Motorschaltschränke 101 oftmals an den Rückseiten 104 der Einschubmodule 102, als auch an den Rückseiten 105 der Einschubschächte 103 aneinander angepaßte mechanische Kodierstecker 108, 109 auf, die sicherstellen, daß der Betrieb eines bestimmten Einschubmoduls 102 immer nur in einem dafür bestimmten Einschubschacht 103 möglich ist. Passen die Kodierstecker 108, 109 nicht zueinander, ist ein vollständiges Einschieben des Einschubmoduls 102 in den Einschubschacht 103 nicht möglich, so daß auch keine Kontaktierung der Steckschienen bzw. Steckverbinder 106, 107 und damit kein Betrieb möglich ist.

Anstelle der in FIG 2 abgebildeten Kodierstecker 108, 109 schlägt die Erfindung vor, die Möglichkeit einer drahtlosen Kommunikation zwischen den Komponenten auch für eine drahtlose Kodierung zu nutzen. An die Stelle der Kodierstecker 108, 109 treten die oben beschriebenen Einrichtungen 111, 112 zur drahtlosen Kommunikation, siehe FIG 3, die als schematische Darstellung auch zur Beschreibung dieser zweiten Ausführungsform der Erfindung dienen kann. Die Kommunikationseinrichtungen 111, 112 sind zu diesem Zweck zum Senden und/oder Empfangen von Daten ausgebildet, die für die Erkennung des Einschubschachtes 102 und/oder des Einschubmoduls 103 relevant sind. Dabei sind die Kommunikationseinrichtungen 111, 112 sowohl den Einschubmodulen 102, als auch den Einschubschächten 103 zugeordnet. Die Zuordnung erfolgt in diesem speziellen Fall dergestalt, daß die Antennen der Kommunikationseinrichtungen 111, 112, hier also die Antenne 113 einerseits und der Leckwellenleiter 115 andererseits, an den Rückseiten 104 der Einschubmodule 102 befestigt sind bzw. den Rückseiten 105 der Einschubschächte 103 zugeordnet und an der Schaltschrankrückseite befestigt ist. Durch eine solche Anordnung wird im montierten Zustand ein kleinstmöglicher Abstand zwischen zusammenwirkenden Kommunikationseinrichtungen 111, 112 erzielt, so daß u. a. die verwendeten Kommunikationseinrichtungen 111, 112 mit geringen Sendeleistungen arbeiten und nur entsprechend klein dimensionierte Sende- und Empfangsvorrichtungen benötigen. Dies ermöglicht nicht nur eine besonders kompakte Bauart des Motorschaltschrankes 101. Es verringert auch den Materialaufwand für die Kommunikationseinrichtungen 111, 112 und damit deren Herstellungskosten.

Die Zuordnung der Kommunikationseinrichtungen 111, 112 zu den Komponenten 102, 103 kann aber auch anderweitig vorgesehen sein. So ist es beispielsweise nicht zwingend erforderlich, daß die Kommunikationseinrichtungen 111, 112 direkt mit den Komponenten 102, 103 verbunden sind. Auch eine lose Zuordnung der Kommunikationseinrichtungen 111, 112 zu den Komponenten 102, 103 ist denkbar. So kann ein Empfänger und/oder Sender beispielsweise in einem Einschubmodul 102 lose einliegen. Ebenso denkbar ist eine entfernte Positionierung der Kommunikationseinrichtungen 111, 112, auch außerhalb der Komponenten 102, 103. Eine solche entfernte Positionierung ist insoweit möglich, als eine eindeutige Zuordnung zu einer bestimmten Komponente 102, 103 verwirklicht ist.

In dem gezeigten Ausführungsbeispiel erhält die dem Einschubmodul 103 zugeordnete erste Kommunikationseinrichtung 111 erkennungsrelevante Daten, insbesondere eine eindeutige Positionskennung (Schacht-ID), von der dem Einschubschacht 103 zugeordneten zweiten Kommunikationseinrichtung 112, wobei beide Kommunikationseinrichtung selbstversorgt sind ("aktive Kodierung"). Anschließend überträgt die dem Einschubmodul 102 zugeordnete erste Kommunikationseinrichtung 111 die empfangenen erkennungsrelevanten Daten an eine dem Einschubmodul 102 zugeordnete lokale, d. h. als Bestandteil des Einschubmoduls 102 ausgebildete Freigabeeinheit, die als Datenverarbeitungsvorrichtung ausgebildet ist. Dort erfolgt die Verarbeitung der erkennungsrelevanten Daten unter Zuhilfenahme eines Computerprogramms, welches zu diesem Zweck in den Speicher der Datenverarbeitungsvorrichtung geladen ist und ausgeführt wird.

Nach einer Überprüfung der erkennungsrelevanten Daten wird das Einschubmodul 102 zum Betrieb mit dem korrespondierenden Einschubschacht 103 freigegeben, sofern ein solcher Betrieb erlaubt ist. Alternativ dazu wird das Einschubmodul 102 für einen solchen Betrieb gesperrt oder bleibt gesperrt, je nach Voreinstellung. Besonders vorteilhaft ist es, wenn die erste Kommunikationseinrichtung 111 in diesem Fall eine entsprechende Nachricht - vorzugsweise unter Angabe des aktuellen Einbauortes des Einschubmoduls 102 - an einen externen Empfänger sendet, beispielsweise an die Steuerzentrale des Motorschaltschrankes 101 oder dergleichen. Hierzu wird, falls es sich um eine kommunikationsfähige Schaltanlage handelt und dies noch nicht erfolgt ist, dem Einschubmodul 102 von der dem Einschubschacht 103 zugeordneten Kommunikationseinrichtung 112 eine entsprechende Adressinformation übergeben, die eine Lokalisierung des Einschubmoduls 102 in dem Motorschaltschrank 101 ermöglicht.

Unter Umständen kann es vor der Freigabe erforderlich sein, das Einschubmodul 102 und/oder den Einschubschacht 103, hier insbesondere die Parameter für die Übertragung von Hauptstrom, Hilfsenergie und Kommunikation (Protokolle etc.) zu modifizieren. Bei einer kommunikationsfähigen Schaltanlage werden die hierfür erforderlichen Änderungen vorzugsweise durch die Steuerzentrale des Motorschaltschrankes 101 vorgenommen.

## Patentansprüche

1. Elektrische Niederspannungs-Schaltanlage (101) mit wenigstens einem in einem Einschubschacht (103) positionierbaren Einschubmodul (102), wobei dem Einschubmodul (102) eine Kommunikationseinrichtung (111) zur Anbindung an eine übergeordnete Steuerungsebene zugeordnet ist, und wobei die dem Einschubmodul (102) zugeordnete Kommunikationseinrichtung (111) für eine drahtlose Kommunikation, nämlich eine Funkübertragung, mit einer entsprechend ausgebildeten Kommunikationseinrichtung (112) der Schaltanlage (101) ausgebildet ist,
**dadurch gekennzeichnet, dass** die Kommunikationseinrichtung (112) der Schaltanlage (101) einen Leckwellenleiter (115) umfasst, wobei der Leckwellenleiter (115) an einem Ende mit einer als Sende-/Empfangseinheit dienenden Steuerzentrale (116) verbunden und am anderen Ende reflexionsfrei abgeschlossen ist und dass der Leckwellenleiter (115) im Inneren eines Schaltschrankes der Schaltanlage (101) angeordnet ist, und zwar entsprechend der Position einer Anzahl von in dem Schaltschrank angeordneten Einschubschächten (103).

2. Elektrische Niederspannungs-Schaltanlage (101) nach Anspruch 1, **dadurch gekennzeichnet,**
**dass** die Kommunikationseinrichtung (111) des Einschubmoduls (102) eine Antenne (113) und eine Sende- und/oder Empfangseinheit (114) aufweist.

3. Elektrische Niederspannungs-Schaltanlage (101) nach einem der Ansprüche 1 oder 2,
**dadurch gekennzeichnet, dass** die Kommunikationseinrichtungen (111, 112) zum Senden und/oder Empfangen von Daten ausgebildet sind, die für die Erkennung des Einschubschachtes (103) und/oder des Einschubmoduls (102) relevant sind und weiter **gekennzeichnet durch** Mittel zum automatischen Erkennen eines Einschubschachtes (103) und/oder eines Einschubmoduls (102).

4. Verfahren zur Kommunikation in einer elektrischen Niederspannungs-Schaltanlage (101) mit wenigstens einem in einem Einschubschacht (103) positionierbaren Einschubmodul (102), wobei dem Einschubmodul (102) eine Kommunikationseinrichtung (111) zur Anbindung an eine übergeordnete Steuerungsebene zugeordnet ist, und wobei die Kommunikation zwischen der dem Einschubmodul (102) zugeordneten Kommunikationseinrichtung (111) und einer Kommunikationseinrichtung (112) der Schaltanlage (101) drahtlos, nämlich per Funkübertragung, erfolgt,
**dadurch gekennzeichnet, dass** die Funkübertragung zwischen den Kommunikationseinrichtungen (111, 112) mittels eines der Kommunikationseinrichtung (112) der Schaltanlage (101) zugehörigen Leckwellenleiters (115) erfolgt, wobei eine automatische Erkennung des Einschubschachtes (103) und/oder des Einschubmoduls (102) erfolgt, und dass hierzu Daten, die für diese Erkennung relevant sind, von den Kommunikationseinrichtungen (111, 112) drahtlos übertragen werden und wobei das Einschubmodul (102) und/oder der Einschubschacht (103) zum Betrieb mit der korrespondierenden Komponente freigegeben wird, wenn eine Überprüfung der erkennungsrelevante Daten erfolgreich abgeschlossen ist, anderenfalls das Einschubmodul (102) und/oder der Einschubschacht (103) für einen solchen Betrieb gesperrt bleibt oder gesperrt wird.

5. Verfahren nach Anspruch 4,
**dadurch gekennzeichnet, dass** das Einschubmodul (102) und/oder der Einschubschacht (103) vor der Freigabe an einen Betrieb mit der korrespondierenden Komponente angepasst werden/wird.

## Claims

1. Electrical low-voltage switchgear unit (101) with at least one plug-in module (102) capable of being positioned in an insertion slot (103), wherein a communication device (111) is assigned to the plug-in module (102) for connection to a higher-level control level, and wherein the communication device (111) assigned to the plug-in module (102) is embodied for wireless communication, specifically radio transmission, with a correspondingly embodied communication device (112) of the switchgear unit (101), **characterised in that** the communication device (112) of the switchgear unit (101) comprises a leaky waveguide (115), wherein the leaky waveguide (115) is connected at one end to a control centre (116) serving as a transmitter/receiver unit, and is terminated at the other end in a reflection-free manner, and that the leaky waveguide (115) is arranged in the interior of a switchgear cabinet of the switchgear unit (101), specifically according to the position of a number of insertion slots (103) arranged in the switchgear cabinet.

2. Electrical low-voltage switchgear unit (101) according to claim 1, **characterised in that** the communication device (111) of the plug-in module (102) has an antenna (113) and a transmitter/receiver unit (114).

3. Electrical low-voltage switchgear unit (101) according to claim 1 or 2,
**characterised in that** the communication devices (111, 112) are embodied for the transmission and/or reception of data, which is relevant for the recognition of the insertion slot (103) and/or of the plug-in module (102), and further **characterised by** means for the automatic recognition of an insertion slot (103) and/or of a plug-in module (102).

4. Method for communication in an electrical low-voltage switchgear unit (101) with at least one plug-in module (102) capable of being positioned in an insertion slot (103), wherein a communication device (111) is assigned to the plug-in module (102) for connection to a higher-level control level, and wherein the communication between the communication device (111) assigned to the plug-in module (102) and a communication device (112) of the switchgear unit (101) takes place wirelessly, specifically by means of radio transmission, **characterised in that** the radio transmission between the communication devices (111, 112) takes place by means of a leaky waveguide (115) belonging to the communication device (112) of the switchgear unit (101), wherein automatic recognition of the insertion slot (103) and/or of the plug-in module (102) takes place, and that to this end, data relevant for this recognition is transmitted wirelessly from the communication devices (111, 112), and wherein the plug-in module (102) and/or the insertion slot (103) are released for operation with the corresponding component, if a check on the data relevant for the recognition is successfully completed, and otherwise the plug-in module (102) and/or the insertion slot (103) are, or continue to be, blocked for such operation.

5. Method according to claim 4, **characterised in that** the plug-in module (102) and/or the insertion slot (103) is/are adjusted to the corresponding component before release for operation.

## Revendications

1. Installation de commutation électrique basse tension (101) comportant au moins un module insérable (102) pouvant être positionné dans un compartiment d'insertion (103), au module insérable (102) étant associé un dispositif de communication (111) pour rattachement à un niveau de commande supérieur, et le dispositif de communication (111) associé au module insérable (102) étant conçu pour une communication sans fil, à savoir une transmission radio, au moyen d'un dispositif de communication (112) de l'installation de commutation (101) réalisé de manière appropriée, **caractérisée en ce que** le dispositif de communication (112) de l'installation de commutation (101) comprend un guide d'ondes à fuite (115), le guide d'ondes à fuite (115) étant, à une extrémité, relié à une centrale de commande (116) qui sert d'unité émettrice-réceptrice, et présentant une terminaison sans réflexion à l'autre extrémité, et **en ce que** le guide d'ondes à fuite (115) est situé à l'intérieur d'une armoire de commande de l'installation de commutation (101), à savoir de manière correspondante à la position d'un nombre de compartiments d'insertion (103) agencés dans l'armoire de commande.

2. Installation de commutation électrique basse tension (101) selon la revendication 1, **caractérisée en ce que** le dispositif de communication (111) du module insérable (102) comporte une antenne (113) et une unité émettrice et/ou réceptrice (114).

3. Installation de commutation électrique basse tension (101) selon l'une des revendications 1 ou 2, **caractérisée en ce que** les dispositifs de communication (111, 112) sont conçus pour émettre et/ou recevoir des données qui sont pertinentes pour la reconnaissance du compartiment d'insertion (103) et/ou du module insérable (102), et également **caractérisée par** des moyens de reconnaissance automatique d'un compartiment d'insertion (103) et/ou d'un module insérable (102).

4. Procédé de communication dans une installation de commutation électrique basse tension (101) comportant au moins un module insérable (102) pouvant être positionné dans un compartiment d'insertion (103), au module insérable (102) étant associé un dispositif de communication (111) pour rattachement à un niveau de commande supérieur, et la communication entre le dispositif de communication (111) associé au module insérable (102) et un dispositif de communication (112) de l'installation de commutation (101) s'effectuant sans fil, à savoir par transmission radio, **caractérisé en ce que** la transmission radio entre les dispositifs de communication (111, 112) s'effectue au moyen d'un guide d'ondes à fuite (115) appartenant au dispositif de communication (112) de l'installation de commutation (101), une reconnaissance automatique du compartiment d'insertion (103) et/ou du module insérable (102) ayant lieu, et **en ce que** des données qui sont pertinentes pour cette reconnaissance sont, à cet effet, transmises sans fil par les dispositifs de communication (111, 112), le module insérable (102) et/ou le compartiment d'insertion (103) étant débloqués pour fonctionner avec le composant correspondant lorsqu'une vérification des données pertinentes pour la reconnaissance est clôturée avec succès, le module insérable (102) et/ou le compartiment d'insertion (103) restant ou étant, dans le cas contraire, bloqués pour un tel fonctionnement.

5. Procédé selon la revendication 4, **caractérisé en ce que** le module insérable (102) et/ou le compartiment d'insertion (103) est/sont adaptés, avant le déblocage, à un fonctionnement avec le composant correspondant.
